# EUROPEAN PATENT APPLICATION

(11) **EP 3 972 237 A1**
(43) Date of publication of application: **23.03.2022**
(21) Application number: 20880786.7
(22) Date of filing: 30.07.2020
(51) Int. Cl.: H04N 5/235

(54) **LIGHT COMPENSATION METHOD FOR CAPTURING PICTURE, INTELLIGENT TELEVISION AND COMPUTER READABLE STORAGE MEDIUM**

(30) Priority: 01.11.2019 CN 201911063435
(71) Applicant: Shenzhen Skyworth-RGB Electronic Co., Ltd., Shenzhen, Guangdong 518057 (CN)
(72) Inventor: HOU, Yarong, Shenzhen, Guangdong 518057 (CN); YU, Minghuo, Shenzhen, Guangdong 518057 (CN); HONG, Wensheng, Shenzhen, Guangdong 518057 (CN); WANG, Dechuang, Shenzhen, Guangdong 518057 (CN); WANG, Xuan, Shenzhen, Guangdong 518057 (CN); CHEN, Xuesi, Shenzhen, Guangdong 518057 (CN)
(74) Representative: Osterhoff, Utz
(86) International application number: PCT/CN2020/105847
(87) International publication number: WO 2021/082569

(57) **Abstract**

The present application discloses a light supplementing method for shooting pictures, which is applied to a smart TV with a camera, the backlight unit of the smart TV includes a plurality of RGB tricolor lamp beads. The light-supplementing method for shooting pictures includes the following operations: receiving a control instruction triggered by a user and controlling the camera to start according to the control instruction; collecting a shooting picture through the camera and acquiring image features of the shooting picture; matching the acquired image features with image features in a preset model to determine a supplementing light mode; and controlling each RGB tricolor lamp bead in the backlight unit to emit light according to the supplementing light mode, thereby the backlight unit supplementing light to the shooting picture. The present application also discloses an smart TV and a computer-readable storage medium.

## Description

### CROSS-REFERENCE TO RELATED APPLICATIONS

The present application claims the priority of a Chinese patent application NO. 201911063435. X, filed with the Patent Office of China on November 1, 2019, entitled "Light Supplementing Method for Shooting Pictures, Smart TV and Computer-Readable Storage Medium". The disclosures of the aforementioned application are incorporated in the present application by reference.

### TECHNICAL FIELD

The present application relates to the technical field of smart TVs, in particular to a light supplementing method for shooting pictures, a smart TV and a computer-readable storage medium.

### BACKGROUND

Applying cameras to smart TVs and improving TV AI capabilities based on the cameras have become a way for TV manufacturers to enrich TV applications and improve the viscosity of TV users, such as developing online video interconnection, selfie and other functions. However, due to the limitation of users' use environment, when using photo-taking and video functions, the image effect is always not ideal, so it is necessary to supplement light for the user's environment through TV backlight. However, because the backlight of the existing smart TVs is a white light source, the way of supplementing light is relatively simple, and the effect of supplementing light is not obvious.

Therefore, in order to improve the photo-taking and video image presentation effect of smart TVs, to realize an intelligent light supplement function of TVs has become an urgent technical problem to be solved.

### SUMMARY

The main purpose of the present application is to provide a light supplementing method for shooting pictures, a smart TV and a computer-readable storage medium, aiming at solving the technical problems of single supplementing light mode and inobvious supplementing light effect in the related art.

In order to achieve the above purpose, the present application provides a light-supplementing method for shooting a picture, which is applied to a smart TV with a camera, a backlight unit of the smart TV includes a plurality of RGB tricolor lamp beads, and the light supplementing method for shooting pictures includes:
receiving a control instruction triggered by a user, and controlling the camera to start according to the control instruction;
collecting a shooting picture through the camera and acquiring image features of the shooting picture;
matching the acquired image features with image features in a preset model, and determining a supplementing light mode; and
controlling each RGB tricolor lamp bead in the backlight unit to emit light according to the supplementing light mode, thereby the backlight unit supplementing light to the shooting picture.

In an embodiment, the control instruction is a shooting instruction, and the operations of collecting a shooting picture through the camera and acquiring image features of the shooting picture; matching the acquired image features with image features in a preset model, and determining a supplementing light mode includes:
collecting the shooting picture through the camera in front of the camera and dividing the shooting picture into a plurality of regions;
calculating a brightness value of each region according to RGB values of each pixel in each region;
comparing the acquired brightness value of each region with a brightness threshold value in a preset model, and determining whether the brightness value of each region is less than the brightness threshold value;
if the brightness value of each region is less than the brightness threshold value, recording regions to be supplemented, and calculating difference values between the brightness values of the regions to be supplemented and the brightness threshold value; and
determining the supplementing light mode according to the regions to be supplemented and the difference values.

In an embodiment, the operation of controlling each RGB tricolor lamp bead in the backlight unit to emit light according to the supplementing light mode, thereby the backlight unit supplementing light to the shooting picture includes:
adjusting brightness values of RGB tricolor lamp beads in the regions to be supplemented to the brightness threshold value according to the supplementing light mode.

In an embodiment, the operation of adjusting brightness values of RGB tricolor lamp beads in the regions to be supplemented to the brightness threshold value according to the supplementing light mode includes:
determining current values corresponding to RGB tricolor lamp beads in each region to be supplemented according to the supplementing light mode; and
controlling a brightness value of each RGB tricolor lamp bead in the regions to be supplemented to the brightness threshold value according to a corresponding current value after adjustment of the RGB tricolor lamp bead.

In an embodiment, the control instruction is a video instruction, and the operations of collecting a shooting picture through the camera and acquiring image features of the shooting picture; matching the acquired image features with image features in a preset model, and determining a supplementing light mode include:
collecting shooting pictures in front of the camera through the camera, and acquiring user information and background information in each shooting picture;
comparing the acquired user information and background information with user information and background information in the preset model to determine a style characteristic corresponding to the shooting picture; and
determining a target tone corresponding to the shooting picture according to the style characteristic, and determining the supplementing light mode according to the target tone.

In an embodiment, the operation of controlling each RGB tricolor lamp bead in the backlight unit to emit light according to the supplementing light mode, thereby the backlight unit supplementing light to the shooting picture includes:
controlling proportions of colors of each RGB tricolor lamp bead in the backlight unit according to the supplementing light mode;
controlling a luminous tone of each RGB tricolor lamp bead in the backlight unit according to the proportions of colors of the RGB tricolor lamp bead.

In an embodiment, the control instruction is a video instruction, and the operations of collecting a shooting picture through the camera and acquiring image features of the shooting picture; matching the acquired image features with image features in a preset model, and determining a supplementing light mode further include:
collecting shooting pictures in front of the camera through the camera, and acquiring user information and background information in each shooting picture and a brightness value of each region in each shooting picture;
comparing the acquired user information and background information with user information and background information in the preset model to determine a style characteristic corresponding to the shooting picture;
determining a target tone corresponding to the shooting picture according to the style characteristic, comparing the acquired brightness value of each region with a brightness threshold value in the preset model, and determining whether the brightness value of each region is less than the brightness threshold value;
if the brightness value of each region is less than the brightness threshold value, recording regions to be supplemented and calculating difference values between brightness values of the regions to be supplemented and the brightness threshold value; and
determining the supplementing light mode according to the target tone, the regions to be supplemented and the difference values.

In an embodiment, the operation of controlling each RGB tricolor lamp bead in the backlight unit to emit light according to the supplementing light mode, thereby the backlight unit supplementing light to the shooting picture includes:
determining proportions of colors of each RGB tricolor lamp bead in the backlight unit and corresponding current values after adjustment of the RGB tricolor lamp beads in each region to be supplemented according to the supplementing light mode;
controlling a luminous tone of each RGB tricolor lamp bead in the backlight according to the proportions of colors of the RGB tricolor lamp bead; and
controlling a brightness value of each RGB tricolor lamp bead in the regions to be supplemented to the brightness threshold value according to a corresponding current value after adjustment of the RGB tricolor lamp bead.

In an embodiment, dividing the shooting picture into a plurality of regions includes: dividing the shooting picture into a plurality of regions evenly according to a number of pixels, or dividing each of a user region and a background region in the shooting picture into a plurality of regions.

In an embodiment, the regions have an one-to-one correspondence with positions of the RGB tricolor lamp beads in the backlight unit.

In addition, in order to achieve the above purpose, the present application also provides a smart TV, which a camera, a backlight unit, a memory, a processor, and a light supplementing program for shooting pictures stored in the memory and executable by the processor;
the camera is configured for collecting a shooting picture in front of the camera;
the backlight unit is configured for supplement light to the shooting picture through lights of a plurality of RGB tricolor lamp beads;
when the light supplementing program for shooting pictures is executed by the processor, operations of the light supplementing method for shooting pictures as described above is implemented.

In addition, in order to achieve the above purpose, the present application also provides a computer-readable storage medium storing a light supplementing program for shooting pictures, wherein, when the light supplementing program for shooting pictures is executed by a processor, operations of the light supplementing method for shooting pictures as described above is implemented.

The present application controls the camera to start according to a control instruction triggered by a user, collects a shooting picture through the camera and acquire image features of the shooting picture, matches the acquired image features with image features in a preset model to determine a supplementing light mode, and controls each RGB tricolor lamp bead in a backlight unit to emit light according to the supplementing light mode, so that the backlight unit can supplement light to the shooting picture. According to the above embodiments, the present application matches the image features in the shooting picture acquired by the camera with the image features in the preset model to determine the supplementing light mode. After the supplementing light mode is determined, the brightness and color of each RGB tricolor lamp bead in the backlight are controlled to adjust the brightness and color of the shooting picture, thereby improving the display effect of the shooting picture and improving the stickiness of users.

### BRIEF DESCRIPTION OF THE DRAWINGS

Fig. 1 is a schematic structural diagram of an embodiment of a smart TV of the present application.
Fig. 2 is a flow diagram of a first embodiment of a light supplementing method for shooting pictures according to the present application;
Fig. 3 is a flow diagram of a second embodiment of the light supplementing method for shooting pictures according to the present application;
Fig. 4 is a flow diagram of a third embodiment of the light supplementing method for shooting pictures according to the present application;
Fig. 5 is a flow diagram of a fourth embodiment of the light supplementing method for shooting pictures according to the present application.

### DETAILED DESCRIPTION OF THE EMBODIMENTS

It should be understood that the specific embodiments described herein are for explanatory purposes only and are not intended to limit the present application.

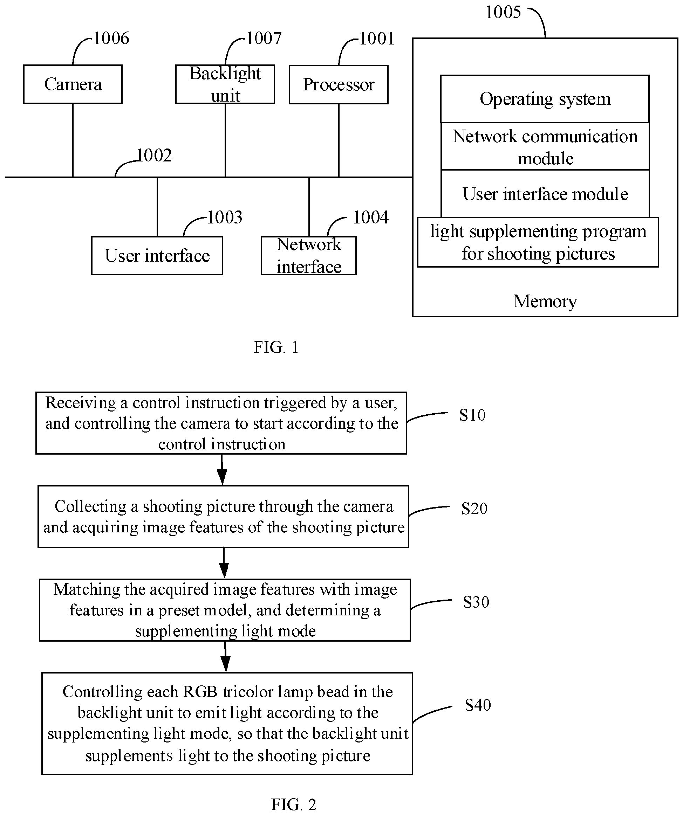

As shown in Fig. 1, Fig. 1 is a structural schematic diagram of an embodiment of a smart TV of the present application.

A device of embodiments of the present application may be a smart TV, or a terminal device with display function such as a smart phone, a tablet computer, a portable computer, or the like. In this embodiment of the present application, the smart TV is preferred as the device of this embodiment.

As shown in Fig. 1, the smart TV may include a processor 1001, such as a CPU, a communication bus 1002, a user interface 1003, a network interface 1004, a memory 1005, a camera 1006, and a backlight unit 1007. The communication bus 1002 is used to realize connection and communication between these components. The user interface 1003 may include a display screen (Display), an input unit such as a keyboard (Keyboard), and the user interface 1003 may optionally include a standard wired interface, and a wireless interface. The network interface 1004 may optionally include a standard wired interface a wireless interface (e.g., a WI-FI interface). The memory 1005 may be a highspeed RAM memory or a non-volatile memory such as a disk memory. The memory 1005 may optionally be a storage device independent of the processor 1001 described above. The camera 1006 may be a built-in camera or an external camera for collecting a shooting picture in front of the camera. The backlight unit 1007 includes a plurality of RGB tricolor lamp beads for supplying light to the shooting pictures by emitting light from the plurality of RGB tricolor lamp beads.

Those skilled in the art will appreciate that the architecture of the smart TV shown in Fig. 1 does not constitute a limitation to the smart TV, which may include more or fewer components than illustrated, or a combination of certain components, or different component arrangements.

As shown in Fig. 1, the memory 1005, as a computer storage medium, can include an operation system, a network communication module, a user interface module and a light supplementing program for shooting pictures.

In the smart TV shown in Fig. 1, the network interface 1004 is mainly configured for connecting a background server and performing data communication with the background server. The user interface 1003 is mainly configured for connecting a client (User) and performing data communication with the client. The processor 1001 can be configured to invoke the light supplementing program for shooting pictures stored in the memory 1005 and perform the following operations:
receiving a control instruction triggered by a user and controlling the camera to start according to the control instruction;
collecting a shooting picture through the camera and acquiring image features of the shooting picture;
matching the acquired image features with image features in a preset model to determine a supplementing light mode;
controlling each RGB tricolor lamp bead in the backlight unit to emit light according to the supplementing light mode, so that the backlight unit can supplement light to the shooting picture.

In an embodiment, the processor 1001 can invoke the light supplementing program for shooting pictures stored in the memory 1005 and also perform the following operations:
collecting a shooting picture in front of the camera through the camera and dividing the shooting picture into a plurality of regions;
calculating a brightness value of each region according to RGB values of each pixel in each region;
the operation of matching the acquired image features with image features in a preset model and determining the supplementing light mode includes:
   comparing the acquired brightness value of each region with a brightness threshold value in the preset model to judge whether the brightness value of each region is less than the brightness threshold value;
   if the brightness value of each region is less than the brightness threshold value, recording regions to be supplemented, and calculating differences between brightness values of the regions to be supplemented and the brightness threshold value;
   determining the supplementing light mode according to the regions to be supplemented and the difference values.

In an embodiment, the processor 1001 can invoke the light supplementing program for shooting pictures stored in the memory 1005 and also perform the following operations:
adjusting brightness values of RGB tricolor lamp beads in the regions to be supplemented to the brightness threshold value according to the supplementing light mode.

In an embodiment, the processor 1001 can invoke the light supplementing program for shooting pictures stored in the memory 1005 and also perform the following operations:
determining current values corresponding to the adjusted RGB tricolor lamp beads in each region to be supplemented according to the supplementing light mode;
controlling a brightness value of each RGB tricolor lamp bead in the regions to be supplemented to the brightness threshold value according to the corresponding current values after adjustment of the RGB tricolor lamp bead.

In an embodiment, the processor 1001 can invoke the light supplementing program for shooting pictures stored in the memory 1005 and also perform the following operations:
collecting shooting pictures in front of the camera through the camera, and obtaining user information and background information in each shooting picture;
the operation of matching the acquired image features with image features in a preset model to determine a supplementing light mode includes:
   comparing the acquired user information and background information with user information and background information in the preset model to determine a style characteristic corresponding to the shooting picture;
   determining a target tone corresponding to the shooting picture according to the style characteristic, and determining the supplementing light mode according to the target tone.

In an embodiment, the processor 1001 can invoke the light supplementing program for shooting pictures stored in the memory 1005 and also perform the following operations:
controlling proportions of colors of each RGB tricolor lamp bead in the backlight unit according to the supplementing light mode;
controlling a luminous tone of each RGB tricolor lamp bead in the backlight unit according to the proportions of colors of the RGB tricolor lamp bead.

In an embodiment, the processor 1001 can invoke the light supplementing program for shooting pictures stored in the memory 1005 and also perform the following operations:
collecting shooting pictures in front of the camera through the camera, and obtaining user information, background information of each shooting picture and a brightness value of each region of each shooting picture;
the operation of matching the acquired image features with image features in a preset model and determining a supplementing light mode includes:
   comparing the acquired user information and background information with user information and background information in the preset model to determine a style characteristic corresponding to the shooting picture;
   determining a target tone corresponding to the shooting picture according to the style characteristic, comparing the acquired brightness value of each region with a brightness threshold value in the preset model, and determining whether the brightness value of each region is less than the brightness threshold value;
   if the brightness value of each region is less than the brightness threshold value, recording regions to be supplemented, and calculating difference values between brightness values of the regions to be supplemented and the brightness threshold value;
   determining the supplementing light mode according to the target tone, the regions to be supplemented and the difference values.

In an embodiment, the processor 1001 can invoke the light supplementing program for shooting pictures stored in the memory 1005 and also perform the following operations:
determining proportions of colors of each RGB tricolor lamp bead in the backlight unit and a corresponding current value after adjustment of the RGB tricolor lamp bead in each region to be supplemented according to the supplementing light mode;
controlling a luminous tone of each RGB tricolor lamp bead in the backlight unit according to the proportions of colors of the RGB tricolor lamp bead;
controlling a brightness value of each RGB tricolor lamp bead in the regions to be supplemented to be the brightness threshold value according to a corresponding current value after adjustment of the RGB tricolor lamp bead.

The specific embodiments of the smart TV of the present application are basically the same as each embodiment of the light supplementing method for shooting pictures described below and will not be described here.

Referring to Fig. 2, Fig. 2 is a flow diagram of a first embodiment of a light supplementing method for shooting pictures of the present application. The light supplementing method for shooting pictures is applied to a smart TV with a camera. A backlight unit of the smart TV includes a plurality of RGB tricolor lamp beads. The light supplementing method for shooting pictures includes:
Operation S10, receiving a control instruction triggered by a user, and controlling the camera to start according to the control instruction.

The device of this embodiment of the present application can be a smart TV, a smart phone, a tablet computer, a portable computer or the like. For convenience of explanation, the subsequent embodiments all take the smart TV as an example. The smart TV has its own camera or is externally connected with a camera, and the backlight unit of the smart TV includes a plurality of RGB tricolor lamp beads. The smart TV can receive a control instruction triggered by a user in real time. When the control instruction is to start the camera to enter a shooting or video mode, the smart TV starts the camera to obtain shooting pictures in front of the camera according to the control instruction. It should be noted that the user can trigger the control instruction of starting the camera by sending infrared remote control codes through a remote controller, sending a voice instruction or a gesture instruction, or triggering physical keys or virtual keys on the smart TV, which is not specifically limited in the present application.

Operation S20, collecting a shooting picture through the camera and acquiring image features of the shooting picture.

After the camera is started, the camera collects shooting pictures in real time, and analyzes the collected shooting pictures to obtain the image features of the shooting pictures. The image features can be brightness, hue, user information or background information of the pictures. Specifically, the image analysis may be to calculate the brightness and hue of each pixel according to RGB data of each pixel in the captured pictures, or to identify the user information and background information in the captured pictures using an existing image recognition algorithm.

Operation S30, matching the acquired image features with image features in a preset model, and determining a supplementing light mode.

An image feature matching model is preset in the smart TV, which stores a brightness threshold value of an ideal shooting picture, tone preferences of different users and tones for different backgrounds through training and learning. After the smart TV acquires image features of a shooting picture, the smart TV can match the acquired image features of the shooting picture with image features in the preset model based on one or a combination of the above image features, so as to determine a supplementing light mode of the shooting picture.

Operation S40, controlling each RGB tricolor lamp bead in the backlight unit to emit light according to the supplementing light mode, so that the backlight unit supplements light to the shooting picture.

An image display system of the smart TV mainly involves a TV main control unit, an MCU (Micro controller Unit), a constant current circuit, the backlight unit and a T-CON board. The TV main control unit is connected with the MCU through SPI interfaces, and the MCU controls a driving logic of the constant current circuit to control each RGB color lamp of each lamp bead in the backlight unit. On the other hand, the TV main control unit is connected with the T-CON board through a shooting picture transmission interface such as a VBYO interface, and transmits image information to the T-CON board. The T-CON board is used for displaying the image information after conversion and processing. When working normally, the TV main control unit decodes the shooting picture, acquires brightness information, chrominance information and the like, processes the brightness information of each shooting picture and transmits the processed brightness information to the MCU through the SPI mode. The shooting picture is transmitted to the T-CON board. Under the synchronization of the synchronization signal, when a picture is displayed on a display screen, the MCU controls each RGB tricolor lamp bead of the backlight unit to emit light according to the brightness information of the current picture.

After the smart TV acquires the supplementing light mode, each RGB tricolor lamp bead in the backlight unit of the smart TV is controlled to emit light according to the supplementing light mode, so that the backlight unit can supplement light to the shooting picture. Specifically, current values and proportions of red light, green light and blue light in each RGB tricolor lamp bead can be determined according to the supplementing light mode. The driving logic of the constant current circuit connected with the RGB tricolor lamp bead is controlled according to the current values and the proportions of the red light, the green light and the blue light in each RGB tricolor lamp bead, thereby realizing the control of the brightness and color tone of each RGB tricolor lamp bead.

In this embodiment, image features of a shooting picture are obtained, and a supplementing light mode is determined according to the image features, a brightness and a color of the shooting picture are controlled according to the supplementing light mode, thereby realizing automatically adjustment of the brightness and color of the shooting picture, and achieving the effect of improving the display effect of the shooting picture and improving the stickiness of users.

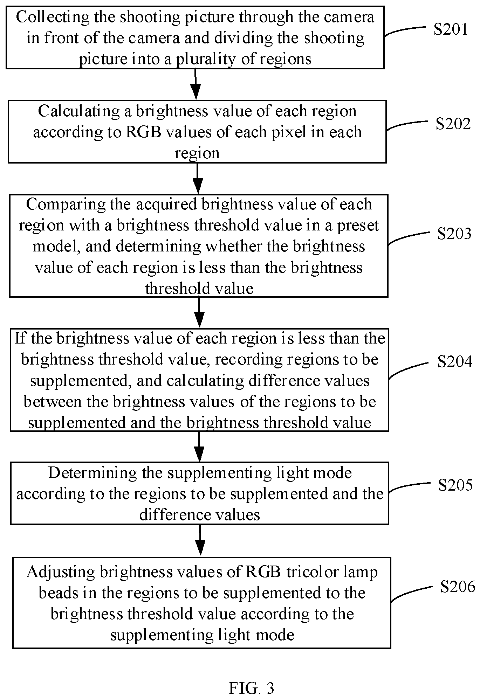

Further, referring to Fig. 3, Fig. 3 is a flow diagram of a second embodiment of the light supplementing method for shooting pictures. Based on the embodiment shown in Fig. 2, when the control instruction is a shooting instruction, after the operation of receiving a control instruction triggered by a user, and controlling the camera to start according to the control instruction, the following operations are included:
Operation S201, collecting the shooting picture through the camera in front of the camera and dividing the shooting picture into a plurality of regions.
Operation S202, calculating a brightness value of each region according to RGB values of each pixel in each region.

When the control instruction is a shooting instruction, the shooting picture in front of the camera is collected by the camera, and the shooting picture is divided into a plurality of regions, for example, the shooting picture is divided into a plurality of regions evenly according to the number of pixels, or each of the user region and the background region in the shooting picture is divided into a plurality of regions. It should be noted that the regions have an one-to-one correspondence with positions of the RGB tricolor lamp beads in the backlight unit. After dividing, RGB values of each pixel in each region is obtained, and an average brightness value of each region is calculated according to the RGB values of each pixel.

Operation S203, comparing the acquired brightness value of each region with a brightness threshold value in a preset model, and determining whether the brightness value of each region is less than the brightness threshold value.

The acquired brightness value of each region is compared with a brightness threshold value in a preset model, whether the brightness value of each region is less than the brightness threshold value is determined, operation S204 is executed when a brightness value of a certain region is less than the brightness threshold value; and the shooting picture is directly displayed when there is no region whose brightness value is less than the brightness threshold value. It should be noted that the brightness threshold value can be specifically set according to the actual situation and is not specifically limited in the present application. Assuming that the number of bits of RGB data of the shooting picture is 8 bits, that is, the maximum value of pixels is 256, when the brightness threshold value is set to 128 which is half of the maximum brightness value, when the calculated brightness value of a certain region is lower than 128, it is considered that this region is dark and needs to be supplemented with light. When the calculated brightness value of a certain region is greater than or equal to 128, it is considered that this region is bright and no need to supplement light.

Operation S204, if the brightness value of each region is less than the brightness threshold value, recording regions to be supplemented, and calculating difference values between the brightness values of the regions to be supplemented and the brightness threshold value.

Operation S205, determining the supplementing light mode according to the regions to be supplemented and the difference values.

Operation S206, adjusting brightness values of RGB tricolor lamp beads in the regions to be supplemented to the brightness threshold value according to the supplementing light mode.

After the regions to be supplemented and the difference values between the brightness values of the regions to be supplemented and the brightness threshold value are determined, a current value of each RGB tricolor lamp bead in the backlight unit is calculated, and then the RGB tricolor lamp bead in the backlight unit is controlled according to the current value.

Specifically, Operation S206 includes:
Operation S210, determining current values corresponding to RGB tricolor lamp beads in each region to be supplemented according to the supplementing light mode.
Operation S211, controlling the brightness value of each RGB tricolor lamp bead in the regions to be supplemented to be the brightness threshold value according to a corresponding current value after adjustment of the RGB tricolor lamp bead.

According to the corresponding relationship between the current values of red light, green light and blue light and the brightnesses of red light, green light and blue light in the RGB tricolor lamp beads obtained from training and learning in the model, the current values of red light, green light and blue light can be appropriately adjusted according to the difference values between the brightness values of the regions to be supplemented and the brightness threshold value, so that the brightness values of the regions to be supplemented reaches the brightness threshold value.

As another embodiment, since a strong white light is required as a flash light when shooting, the brightnesses of the regions to be supplemented can be increased to a maximum value within an allowable range. For example, according to the peak current that each lamp bead can bear, and under the condition of maintain the performance, the current can be raised to be higher than the maximum current for normal operation. For example, if the normal operation current of the lamp bead is 120mA, the bearable peak current is 350mA, and the verified safe increased current is 200mA, the maximum current that can be raised during shooting can reach 200mA, so as to make the effect of shooting best.

In the embodiment, brightness values of different regions of the shooting picture are obtained, and brightness values of regions to be supplemented and difference values between the brightness values of the regions to be supplemented and the brightness threshold value are determined according to the brightness values, thereby controlling the brightnesses of the RGB tricolor lamp beads in each region, and realizing better effect of shooting.

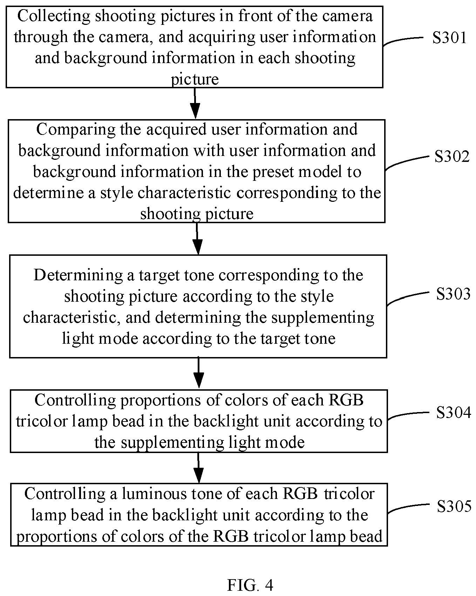

Referring to Fig. 4, Fig. 4 is a flow diagram of a third embodiment of the method for supplementing light for shooting pictures. Based on the embodiment shown in Fig. 2, when the control instruction is a video instruction, after the operation of receiving a control instruction triggered by a user, and controlling the camera to start according to the control instruction, the following operations are included:
Operation S301, collecting shooting pictures in front of the camera through the camera, and acquiring user information and background information in each shooting picture.
Operation S302, comparing the acquired user information and background information with user information and background information in the preset model to determine a style characteristic corresponding to the shooting picture.

When the control instruction is a video instruction, shooting pictures in front of the camera are collected by the camera, and user information and background information in each shooting picture are acquired through an image recognition algorithm, for example a user identity, a user gender, a background decoration style and the like in the shooting picture are determined. After the user information and background information are obtained, the user information and background information are matched with user information and background information in a preset model. Because different color preferences for different user identities, color preferences for different genders of users and colors corresponding to different background decoration styles are obtained through training and learning in the preset model, the acquired user information and background information are compared with the user information and background information in the preset model, and the corresponding style characteristic of the shooting picture is determined.

Operation S303, determining a target tone corresponding to the shooting picture according to the style characteristic, and determining the supplementing light mode according to the target tone.

Operation S304, controlling proportions of colors of each RGB tricolor lamp bead in the backlight unit according to the supplementing light mode.

Operation S305, controlling a luminous tone of each RGB tricolor lamp bead in the backlight unit according to the proportions of colors of the RGB tricolor lamp bead.

Based on the luminous principle of the RGB tricolor lamp beads, the RGB tricolor lamp beads can be controlled to emit different colors of light according to different proportions of R, G and B colors. For example, when the shooting picture needs to be supplemented with blue light, then, the current values of the blue lamps in the RGB tricolor lamp beads in some regions are correspondingly raised for blue light supplement according to the overcurrent ways. If it is necessary to add colors other than red, green, blue and white, the brightness values of red, green and blue of some or all lamp beads are adjusted according to different proportions of R, G and B colors. Then, the image shows the combined colors of the corresponding backlights, thus adding corresponding colors to the environment.

In this embodiment, user information and background information in the shooting picture are obtained, and a target tone corresponding to the shooting picture is determined according to the user information and background information, thereby controlling a luminous tone of each RGB tricolor lamp bead, and realizing better effect of the video and achieving personalized customization function.

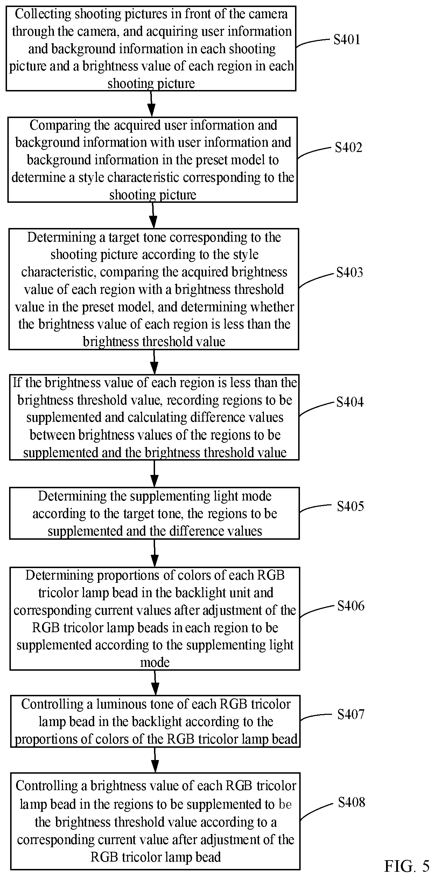

Referring to Fig. 5, Fig. 5 is a flow diagram of a fourth embodiment of the method for supplementing light for shooting pictures. Based on the embodiment shown in Fig. 2, when the control instruction is a video instruction, after the operation of receiving a control instruction triggered by a user, and controlling the camera to start according to the control instruction, the following operations are included:
Operation S401, collecting shooting pictures in front of the camera through the camera, and acquiring user information and background information in each shooting picture and a brightness value of each region in each shooting picture.

When the control instruction is a video instruction, the camera collects the shooting picture in front of the camera. User information and background information in each shooting picture are obtained through an image recognition algorithm, for example a user identity, a user gender, a background decoration style and the like in the shooting picture are obtained. At the same time, each shooting picture is divided into a plurality of regions, for example, the shooting picture is divided into a plurality of regions evenly according to the number of pixels. It should be noted that the regions have an one-to-one correspondence with positions of the RGB tricolor lamp beads in the backlight unit. After dividing, RGB values of each pixel in each region is obtained, and an average brightness value of each region is calculated according to the RGB values of each pixel.

After the user information, background information and brightness value of each region are obtained, the user information, background information and brightness value of each region are matched with user information, background information and brightness values of each region in a preset model. Because different color preferences for different user identities, color preferences for different genders of users and color corresponding to different background decoration styles are obtained through training and learning in the preset model, the acquired user information and background information are compared with the user information and background information in the preset model, and the corresponding style characteristic of the shooting picture is determined. At the same time, the acquired brightness value of each region is compared with a brightness threshold value in the preset model, and whether the brightness value of each region is less than the brightness threshold value is determined, thereby determining regions to be supplemented.

Operation S402, comparing the acquired user information and background information with user information and background information in the preset model to determine a style characteristic corresponding to the shooting picture.

Operation S403, determining a target tone corresponding to the shooting picture according to the style characteristic, comparing the acquired brightness value of each region with a brightness threshold value in the preset model, and determining whether the brightness value of each region is less than the brightness threshold value.

Operation S404, if the brightness value of each region is less than the brightness threshold value, recording regions to be supplemented and calculating difference values between brightness values of the regions to be supplemented and the brightness threshold value.

Operation S405, determining the supplementing light mode according to the target tone, the regions to be supplemented and the difference values.

Operation S406, determining proportions of colors of each RGB tricolor lamp bead in the backlight unit and corresponding current values after adjustment of the RGB tricolor lamp beads in each region to be supplemented according to the supplementing light mode.

Operation S407, controlling a luminous tone of each RGB tricolor lamp bead in the backlight according to the proportions of colors of the RGB tricolor lamp bead.

Based on the luminous principle of the RGB tricolor lamp beads, the RGB tricolor lamp beads can be controlled to emit different colors of light according to different proportions of R, G and B colors. For example, when the shooting picture needs to be supplemented with blue light, then, the current values of the blue lamps in the RGB tricolor lamp beads in some regions are correspondingly raised for blue light supplement according to the overcurrent ways. If it is necessary to add colors other than red, green, blue and white, the brightness values of red, green and blue of some or all lamp beads are adjusted according to different proportions of R, G and B colors. Then, the image shows the combined colors of the corresponding backlights, thus adding corresponding colors to the whole shooting picture.

Operation S408, controlling a brightness value of each RGB tricolor lamp bead in the regions to be supplemented to be the brightness threshold value according to a corresponding current value after adjustment of the RGB tricolor lamp bead.

After the regions to be supplemented and the difference values between the brightness values of the regions to be supplemented and the brightness threshold value are determined, the current value of each RGB tricolor lamp bead in the backlight unit is calculated, and then the RGB tricolor lamp bead in the backlight unit is controlled according to the current value. According to the corresponding relationship between the current values of red light, green light and blue light and the brightnesses of red light, green light and blue light in the RGB tricolor lamp beads obtained from training and learning in the model, the current values of red light, green light and blue light can be appropriately adjusted according to the difference values between the brightness values of the regions to be supplemented and the brightness threshold value, so that the brightness values of the regions to be supplemented reaches the brightness threshold value.

Of course, as another embodiment, the operations S407 and S408 can be combined for calculation, namely, at the time of controlling the luminous tone of each RGB tricolor lamp bead in the backlight according to the proportions of colors of the RGB tricolor lamp bead, the brightness value of each RGB tricolor lamp bead in the regions to be supplemented is controlled to the brightness threshold value according to the corresponding current value after adjustment of the RGB tricolor lamp bead. The reason is that adjusting the ratios of red light, green light and blue light is also determined according to the current value ratios of the three color lights. After the current value ratios of the three color lights is determined, the current values of the three color lights can be synchronously increased or reduced to adjust their brightnesses. Therefore, in this embodiment, after the target tone is determined based on the user information and the background information, the brightnesses of the regions to be supplemented is synchronously adjusted to the brightness threshold value.

In this embodiment, user information, background information and a brightness value of each region in the shooting picture are acquired, a target tone corresponding to the shooting picture and brightnesses of the regions to be supplemented are determined according to the user information, background information and the brightness value of each region, and then the luminous tone and brightness of each RGB tricolor lamp bead are controlled, thus realizing better effect of the video and achieving personalized customization function.

In addition, the embodiments of the present application also provides a computer-readable storage medium. The computer-readable storage medium stores a light supplementing program for shooting pictures. When the light supplementing program for shooting pictures is executed by a processor, the following operations are realized:
receiving a control instruction triggered by a user and controlling a camera to start according to the control instruction;
collecting a shooting picture through the camera and acquiring image features of the shooting picture;
matching the acquired image features with image features in a preset model to determine a supplementing light mode;
controlling each RGB tricolor lamp bead in a backlight unit to emit light according to the supplementing light mode, so that the backlight unit supplements light to the shooting picture.

In one embodiment, when the light supplementing program for shooting pictures is executed by the processor, the following operations are also realized:
collecting the shooting picture in front of the camera through the camera and dividing the shooting picture into a plurality of regions;
calculating a brightness values of each region according to RGB values of each image pixel in each region;
the operation of matching the acquired image features with image features in a preset model to determine a supplementing light mode include:
   comparing the acquired brightness value of each region with a brightness threshold value in the preset model to determine whether the brightness value of each region is less than the brightness threshold value;
   if the brightness value of each region is less than the brightness threshold value, recording regions to be supplemented, and calculating difference values between brightness values of the regions to be supplemented and the brightness threshold value;
   determining the supplementing light mode according to the regions to be supplemented and the difference values.

In one embodiment, when the light supplementing program for shooting pictures is executed by the processor, the following operations are also realized:
adjusting brightness values of RGB tricolor lamp beads in the regions to be supplemented to be the brightness threshold value according to the supplementing light mode.

In one embodiment, when the light supplementing program for shooting pictures is executed by the processor, the following operations are also realized:
determining current values corresponding to the adjusted RGB tricolor lamp beads in each region to be supplemented according to the supplementing light mode;
controlling a brightness value of each RGB tricolor lamp bead in the regions to be supplemented to the brightness threshold value according to the current values corresponding to the adjusted RGB tricolor lamp beads.

In one embodiment, when the light supplementing program for shooting pictures is executed by the processor, the following operations are also realized:
collecting shooting pictures in front of the camera through the camera, and obtaining user information and background information in each shooting picture;
the operation of matching the acquired image features with image features in a preset model to determine a supplementing light mode includes:
   comparing the acquired user information and background information with user information and background information in the preset model to determine a style characteristic corresponding to the shooting picture;
   determining a target tone corresponding to the shooting picture according to the style characteristic, and determining the supplementing light mode according to the target tone.

In one embodiment, when the light supplementing program for shooting pictures is executed by the processor, the following operations are also realized:
controlling proportions of colors of each RGB tricolor lamp bead in the backlight unit according to the supplementing light mode;
controlling a luminous tone of each RGB tricolor lamp bead in the backlight unit according to the proportions of colors of the RGB tricolor lamp bead.

In one embodiment, when the light supplementing program for shooting pictures is executed by the processor, the following operations are also realized:
collecting shooting pictures in front of the camera through the camera, and obtaining user information, background information of each shooting picture and a brightness value of each region of each shooting picture;
the operation of matching the acquired image features with image features in a preset model and determining a supplementing light mode includes:
   comparing the acquired user information and background information with user information and background information in the preset model to determine a style characteristic corresponding to the shooting picture;
   determining a target tone corresponding to the shooting picture according to the style characteristic, comparing the acquired brightness value of each region with a brightness threshold value in the preset model, and determining whether the brightness value of each region is less than the brightness threshold value;
   if the brightness value of each region is less than the brightness threshold value, recording regions to be supplemented, and calculating differences between brightness values of the regions to be supplemented and the brightness threshold value;
   determining the supplementing light mode according to the target tone, the regions to be supplemented and the difference values.

In one embodiment, when the light supplementing program for shooting pictures is executed by the processor, the following operations are also realized:
determining proportions of colors of each RGB tricolor lamp bead in the backlight unit and a corresponding current value after adjustment of the RGB tricolor lamp bead in each region to be supplemented according to the supplementing light mode;
controlling a luminous tone of each RGB tricolor lamp bead in the backlight unit according to the proportions of colors of the RGB tricolor lamp bead;
controlling a brightness value of each RGB tricolor lamp bead in the regions to be supplemented to be the brightness threshold value according to the corresponding current value after adjustment of the RGB tricolor lamp bead.

The specific embodiments of the computer-readable storage medium of the present application are basically the same as embodiments of the light supplementing method for shooting pictures and are not described here.

It should be noted that in this article, the terms "including", "comprising" or any other variation thereof are intended to encompass non-exclusive inclusion, so that a process, method, article or system that includes a set of elements includes not only those elements but also other elements that are not explicitly listed or that are inherent to such process, method, article or system. In the absence of further limitations, an element defined by the sentence "including an ..." does not preclude the existence of another identical element in the process, method, article or system in which the element is included.

The above-mentioned serial numbers of the embodiments of the present application are for description only and do not represent the superiority and inferiority of the embodiments.

From the above description of the embodiments, it will be apparent to those skilled in the art that the methods of the above embodiments can be implemented by means of software plus the necessary general hardware platform, and of course also by means of hardware, but in many cases the former is a preferred embodiment. Based on this understanding, the technical proposal of the present application can be embodied in the form of software products in essence or the part that contributes to the prior art. The computer software product is stored in a storage medium (e.g. ROM/RAM, magnetic disk, optical disk) as described above and includes instructions for causing a terminal device (which may be a mobile phone, a computer, server, an air conditioner, or a network device, etc.) to perform the methods described in various embodiments of the present application.

The above are only preferred embodiments of the present application, and do not limit the scope of the present application. Any equivalent structure or equivalent process transformation made using the contents of the specification and drawings of the present application, or directly or indirectly applying in other related technical fields, are all included in the claimed scope of the present application.

## Claims

1. A light supplementing method for shooting pictures, wherein, the light supplementing method for shooting pictures is applied to a smart TV with a camera, a backlight unit of the smart TV comprises a plurality of RGB tricolor lamp beads, and the light supplementing method for shooting pictures comprises:
receiving a control instruction triggered by a user, and controlling the camera to start according to the control instruction;
collecting a shooting picture through the camera and acquiring image features of the shooting picture;
matching the acquired image features with image features in a preset model, and determining a supplementing light mode; and
controlling each RGB tricolor lamp bead in the backlight unit to emit light according to the supplementing light mode, thereby the backlight unit supplementing light to the shooting picture.

2. The light supplementing method for shooting pictures as claimed in claim 1, wherein the control instruction is a shooting instruction, and the operations of collecting a shooting picture through the camera and acquiring image features of the shooting picture; matching the acquired image features with image features in a preset model, and determining a supplementing light mode comprises:
collecting the shooting picture through the camera in front of the camera and dividing the shooting picture into a plurality of regions;
calculating a brightness value of each region according to RGB values of each pixel in each region;
comparing the acquired brightness value of each region with a brightness threshold value in a preset model, and determining whether the brightness value of each region is less than the brightness threshold value;
if the brightness value of each region is less than the brightness threshold value, recording regions to be supplemented, and calculating difference values between the brightness values of the regions to be supplemented and the brightness threshold value; and
determining the supplementing light mode according to the regions to be supplemented and the difference values.

3. The light supplementing method for shooting pictures as claimed in claim 2, wherein the operation of controlling each RGB tricolor lamp bead in the backlight unit to emit light according to the supplementing light mode, thereby the backlight unit supplementing light to the shooting picture comprises:
adjusting brightness values of RGB tricolor lamp beads in the regions to be supplemented to the brightness threshold value according to the supplementing light mode.

4. The light supplementing method for shooting pictures as claimed in claim 3, wherein, the operation of adjusting brightness values of RGB tricolor lamp beads in the regions to be supplemented to the brightness threshold value according to the supplementing light mode comprises:
determining current values corresponding to RGB tricolor lamp beads in each region to be supplemented according to the supplementing light mode; and
controlling a brightness value of each RGB tricolor lamp bead in the regions to be supplemented to the brightness threshold value according to a corresponding current value after adjustment of the RGB tricolor lamp bead.

5. The light supplementing method for shooting pictures as claimed in claim 1, wherein the control instruction is a video instruction, and the operations of collecting a shooting picture through the camera and acquiring image features of the shooting picture; matching the acquired image features with image features in a preset model, and determining a supplementing light mode comprise:
collecting shooting pictures in front of the camera through the camera, and acquiring user information and background information in each shooting picture;
comparing the acquired user information and background information with user information and background information in the preset model to determine a style characteristic corresponding to the shooting picture; and
determining a target tone corresponding to the shooting picture according to the style characteristic, and determining the supplementing light mode according to the target tone.

6. The light supplementing method for shooting pictures as claimed in claim 5, wherein the operation of controlling each RGB tricolor lamp bead in the backlight unit to emit light according to the supplementing light mode, thereby the backlight unit supplementing light to the shooting picture comprises:
controlling proportions of colors of each RGB tricolor lamp bead in the backlight unit according to the supplementing light mode;
controlling a luminous tone of each RGB tricolor lamp bead in the backlight unit according to the proportions of colors of the RGB tricolor lamp bead.

7. The light supplementing method for shooting pictures as claimed in claim 5, wherein the control instruction is a video instruction, and the operations of collecting a shooting picture through the camera and acquiring image features of the shooting picture; matching the acquired image features with image features in a preset model, and determining a supplementing light mode further comprises:
collecting shooting pictures in front of the camera through the camera, and acquiring user information and background information in each shooting picture and a brightness value of each region in each shooting picture;
comparing the acquired user information and background information with user information and background information in the preset model to determine a style characteristic corresponding to the shooting picture;
determining a target tone corresponding to the shooting picture according to the style characteristic, comparing the acquired brightness value of each region with a brightness threshold value in the preset model, and determining whether the brightness value of each region is less than the brightness threshold value;
if the brightness value of each region is less than the brightness threshold value, recording regions to be supplemented and calculating difference values between brightness values of the regions to be supplemented and the brightness threshold value; and
determining the supplementing light mode according to the target tone, the regions to be supplemented and the difference values.

8. The light supplementing method for shooting pictures as claimed in claim 7, wherein the operation of controlling each RGB tricolor lamp bead in the backlight unit to emit light according to the supplementing light mode, thereby the backlight unit supplementing light to the shooting picture comprises:
determining proportions of colors of each RGB tricolor lamp bead in the backlight unit and corresponding current values after adjustment of the RGB tricolor lamp beads in each region to be supplemented according to the supplementing light mode;
controlling a luminous tone of each RGB tricolor lamp bead in the backlight according to the proportions of colors of the RGB tricolor lamp bead; and
controlling a brightness value of each RGB tricolor lamp bead in the regions to be supplemented to the brightness threshold value according to a corresponding current value after adjustment of the RGB tricolor lamp bead.

9. The smart TV as claimed in claim 2, wherein dividing the shooting picture into a plurality of regions comprises: dividing the shooting picture into a plurality of regions evenly according to a number of pixels, or dividing each of a user region and a background region in the shooting picture into a plurality of regions.

10. The smart TV as claimed in claim 9, wherein the regions have an one-to-one correspondence with positions of the RGB tricolor lamp beads in the backlight unit.

11. A smart TV, wherein the smart TV comprises a camera, a backlight unit, a memory, a processor, and a light supplementing program for shooting pictures stored in the memory and executable by the processor, wherein:
the camera is configured for collecting a shooting picture in front of the camera;
the backlight unit is configured for supplement light to the shooting picture through lights of a plurality of RGB tricolor lamp beads;
when the light supplementing program for shooting pictures is executed by the processor, operations of the light supplementing method for shooting pictures as claimed in any one of claims 1 to 11 is implemented.

12. A computer-readable storage medium storing a light supplementing program for shooting pictures, wherein, when the light supplementing program for shooting pictures is executed by a processor, operations of the light supplementing method for shooting pictures as claimed in any one of claims 1 to 11 is implemented.
